(19) Europäisches Patentamt
European Patent Office
Office européen des brevets

(11) EP 4 524 962 A1

(12) **EUROPEAN PATENT APPLICATION**
published in accordance with Art. 153(4) EPC

(43) Date of publication:
**19.03.2025 Bulletin 2025/12**

(21) Application number: **24817029.2**

(22) Date of filing: **28.05.2024**

(51) International Patent Classification (IPC):
***G11B 7/0065*** *(2006.01)* ***C08F 290/06*** *(2006.01)*
***C08F 2/44*** *(2006.01)* ***C08F 2/50*** *(2006.01)*
***C08K 5/06*** *(2006.01)*

(52) Cooperative Patent Classification (CPC):
**C08F 2/44; C08F 2/50; C08F 290/06; C08K 5/06; G11B 7/0065**

(86) International application number:
**PCT/KR2024/007223**

(87) International publication number:
**WO 2024/258088 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 KR 20230076829**
**27.05.2024 KR 20240068785**

(71) Applicant: **LG Chem, Ltd.**
**Yeongdeungpo-gu**
**Seoul 07336 (KR)**

(72) Inventors:
- **KIM, Min Soo**
**Daejeon 34122 (KR)**
- **HEO, Yongjoon**
**Daejeon 34122 (KR)**
- **LEE, Hanna**
**Daejeon 34122 (KR)**
- **JUNG, Soonhwa**
**Daejeon 34122 (KR)**
- **HONG, Chulsuk**
**Daejeon 34122 (KR)**

(74) Representative: **Plasseraud IP**
**104 Rue de Richelieu**
**CS92104**
**75080 Paris Cedex 02 (FR)**

(54) **HOLOGRAM RECORDING MEDIUM, METHOD FOR MANUFACTURING SAME, AND OPTICAL ELEMENT COMPRISING SAME**

(57) The present disclosure relates to a hologram recording medium, a preparation method thereof, and an optical element including the same. The hologram recording medium can have excellent optical recording characteristics and low haze by controlling an element ratio of fluorine on the surface of the photopolymer layer to a specific range, and can provide an optical element with excellent visibility.

【FIG. 1】

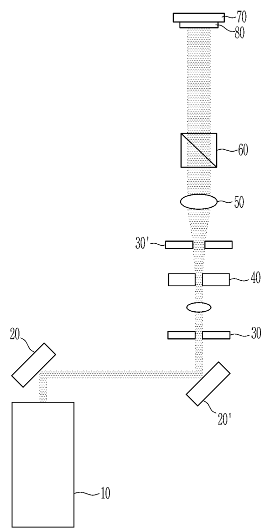


EP 4 524 962 A1

## Description

## [TECHNICAL FIELD]

CROSS-REFERENCE TO RELATED APPLICATION(S)

This application claims the benefit of Korean Patent Application No. 10-2023-0076829 filed on June 15, 2023 and Korean Patent Application No. 10-2024-0068785 filed on May 27, 2024 in the Korean Intellectual Property Office, the disclosures of which are incorporated herein by reference in their entirety.

The present disclosure relates to a hologram recording medium, a preparation method thereof, and an optical element comprising the same.

## [BACKGROUND]

Hologram recording medium records information by changing a refractive index in the holographic recording layer in the medium through an exposure process, reads the variation of refractive index in the medium thus recorded, and reproduces the information.

In this regard, a photopolymer composition can be used for preparing a hologram. The photopolymer can easily store light interference pattern as a hologram by photopolymerization of a photoreactive monomer. Therefore, the photopolymer can be used in various fields such as, for example, smart devices such as mobile devices, wearable display parts, vehicle articles (e.g., head up display), holographic fingerprint recognition system, optical lenses, mirrors, deflecting mirrors, filters, diffusing screens, diffraction elements, light guides, waveguides, holographic optical elements having projection screen and/or mask functions, medium of optical memory system and light diffusion plate, optical wavelength multiplexers, reflection type, transmission type color filters, and the like.

Specifically, a photopolymer composition for preparing a hologram includes a polymer matrix, a photoreactive monomer, and a photoinitiator system, and the photopolymer layer prepared from such a composition is irradiated with laser interference light to induce photopolymerization of local monomers.

A refractive index modulation is generated through this local photopolymerization process, and a diffraction grating is generated by such a refractive index modulation. The refractive index modulation value ($\Delta n$) is influenced by the thickness and the diffraction efficiency (DE) of the photopolymer layer, and the angular selectivity increases as the thickness decreases.

Recently, a request for development of materials with a high diffraction efficiency and high visibility has been increased.

## [DETAILED DESCRIPTION OF THE INVENTION]

### [Technical Problem]

According to an embodiment of the present disclosure, a hologram recording medium is provided.

According to another embodiment of the present disclosure, a method for preparing the hologram recording medium is provided.

According to yet another embodiment of the present disclosure, an optical element comprising the hologram recording medium is provided.

### [Technical Solution]

Now, a hologram recording medium, a preparation method thereof, an optical element comprising the same, and the like according to specific embodiments of the present disclosure will be described.

The term "hologram recording medium" as used herein means a medium (or media) on which optical information can be recorded in an entire visible range and an ultraviolet range (e.g., 300 to 1,200 nm) through an exposure process, unless specifically stated otherwise. Therefore, the hologram recording medium herein may mean a medium on which optical information is recorded, or may mean a medium before recording that is capable of recording optical information. The hologram herein may include all of visual holograms such as in-line (Gabor) holograms, off-axis holograms, full-aperture transfer holograms, white light transmission holograms ("rainbow holograms"), Denisyuk holograms, off-axis reflection holograms, edgeliterature holograms or holographic stereograms.

According to one embodiment of the disclosure, there is provided a hologram recording medium comprising: a photopolymer layer which includes a polymer matrix formed by crosslinking a siloxane-based polymer containing a silane functional group and an acrylic-based polyol; a photoreactive monomer and a photoinitiator system or a photopolymer

obtained therefrom; and a fluorinated compound, wherein based on the total amount of carbon, oxygen, fluorine and silicon atoms on the surface of the photopolymer layer confirmed by Electron Spectroscopy for Chemical Analysis (ESCA), an element ratio of fluorine is 0.05 to 3 atomic%.

The present inventors have studied to improve visibility of holographic recording medium while maintaining all physical properties of holographic recording medium at an excellent level. As a result, it is confirmed that when compatibility of a photopolymer composition improves, haze of a hologram recording medium produced therefrom decreases and visibility improves.

In addition, it is confirmed that an element ratio of fluorine on a surface of a photopolymer layer decreases as much as compatibility of a photopolymer composition improves. However, it is confirmed that when an element ratio of fluorine on a surface of a photopolymer layer is extremely low, the overall physical properties of hologram recording medium deteriorate. Accordingly, the present inventors have found through experiments that when an element ratio of fluorine on a surface of a photopolymer layer satisfies a specific range, it not only is excellent in optical recording characteristics which are general physical properties of the hologram recording medium, but also has excellent visibility due to low haze derived from excellent compatibility of the materials included in a photopolymer layer, and completed the present invention.

Specifically, the element ratio on the surface of the photopolymer layer can be confirmed using Electron Spectroscopy for Chemical Analysis (ESCA). According to the ESCA described in Test Example described later, the elements found on the surface of the sample to be analyzed can be qualitatively analyzed through a survey scan, and then a narrow scan can be performed for each found element to determine the element ratio. The element ratio of the photopolymer layer herein may be understood as the element ratio of the photopolymer layer before recording or the element ratio of the photopolymer layer after recording. The element ratio of the photopolymer layer before recording and the element ratio of the photopolymer layer after recording may be the same within an experimental error range, but may be different from each other in some embodiments. That is, even if the element ratio before recording and the element ratio after recording of the photopolymer layer are different from each other beyond the error range, it is possible to exhibit the desired effect of the hologram recording medium of one embodiment as long as the element ratio before or after recording is within the above-mentioned range.

The fluorine element ratio on the surface of the photopolymer layer included in the hologram recording medium of one embodiment may be 0.05 atomic% or more, 0.06 atomic% or more, 0.07 atomic% or more, 0.08 atomic% or more, 0.09 atomic% or more, or 0.10 atomic% or more, and 3 atomic% or less, 2.9 atomic% or less, 2.8 atomic% or less, or 2.7 atomic% or less.

Based on the total amount of carbon, oxygen, fluorine and silicon atoms on the surface of the photopolymer layer confirmed by ESCA, an element ratio of carbon is 50 to 80 atomic%, an element ratio of oxygen is 15 to 40 atomic%, and an element ratio of silicon is 0.5 to 10 atomic%.

Specifically, the carbon element ratio on the surface of the photopolymer layer may be 50 atomic% or more, 55 atomic% or more, 60 atomic% or more, 65 atomic% or more, 70 atomic% or more, 71 atomic% or more, or 72 atomic% or more, and 80 atomic% or less, 79 atomic% or less, or 78.5 atomic% or less.

The oxygen element ratio on the surface of the photopolymer layer may be 15 atomic% or more, 16 atomic% or more, or 17 atomic% or more, and 40 atomic% or less, 35 atomic% or less, 30 atomic% or less, 28 atomic% or less, 26 atomic% or less, 24 atomic% or less, or 22 atomic% or less.

The silicon element ratio on the surface of the photopolymer layer may be 0.5 atomic% or more, 1.0 atomic% or more, or 1.2 atomic% or more, and 10 atomic% or less, 9 atomic% or less or 8 atomic% or less.

The ratio of carbon, oxygen, fluorine and silicon elements is a percentage (atomic%) of the total amount of carbon, oxygen, fluorine and silicon atoms on the surface of the photopolymer layer, which is confirmed by ESCA.

As the photopolymer layer exhibits the above-mentioned element ratio, it has excellent optical recording characteristics and excellent visibility due to low haze. In particular, if the fluorine element ratio is less than the above range, there may be a problem that the optical recording characteristics deteriorate. If the fluorine element ratio exceeds the above range, there may be a problem that haze increases and then visibility deteriorates.

The hologram recording medium according to one embodiment includes a photopolymer layer which includes a polymer matrix formed by crosslinking a siloxane-based polymer containing a silane functional group and an acrylic-based polyol; a photoreactive monomer and a photoinitiator system or a photopolymer obtained therefrom; and a fluorinated compound.

The photopolymer layer may be a photopolymer layer in the state before recording that is capable of recording optical information, or may be a photopolymer layer in the state in which optical information is recorded.

A photopolymer layer on which optical information is recorded can be prepared by irradiating an object light and a reference light onto the photopolymer layer before recording. When an object light and a reference light are irradiated onto the photopolymer layer before recording, due to the interference field between the object light and the reference light, the photoinitiator system is present in an inactive state in the destructive interference region, and photopolymerization of the photoreactive monomer does not occur, and in the constructive interference region, photopolymerization of the photoreactive monomer occurs due to the activated photoinitiator system. As the photoreactive monomer is continuously consumed in the constructive interference region, a concentration difference occurs between the photoreactive monomer in the destructive interference region and the constructive interference region. As a result, the photoreactive monomer in the destructive interference region diffuses into the constructive interference region. At this time, the fluorinated compound, which is a plasticizer, moves in the opposite direction to the photoreactive monomer. Since the photoreactive monomer and the photopolymer formed therefrom have a high refractive index compared to the polymer matrix and the fluorinated compound, a spatial change in the refractive index occurs in the photopolymer layer. Such a grating surface plays the role of a reflective surface that reflects incident light due to the difference in refractive index. When light having the wavelength at the time of recording is incident in the direction of the reference light after recording the hologram, it satisfies the Bragg condition and the light diffracts in the direction of the original object light, which makes it reproduce holographic optical information.

Therefore, if the photopolymer layer is in a state before recording, the photopolymer layer may include a photoreactive monomer, a photoinitiator and a fluorinated compound in a randomly dispersed form within the polymer matrix.

On the other hand, if optical information is recorded on the photopolymer layer, the photopolymer layer may include a polymer matrix, a photopolymer distributed so as to form a grating and a fluorinated compound.

The photopolymer layer is formed from a photopolymer composition which includes a polymer matrix formed by crosslinking a siloxane-based polymer containing a silane functional group and an acrylic-based polyol, or a precursor thereof; a fluorinated compound; a photoreactive monomer; and a photoinitiator system.

The polymer matrix is formed by crosslinking a siloxane-based polymer containing a silane functional group (Si-H) and an acrylic-based polyol. Specifically, the polymer matrix is formed by crosslinking an acrylic-based polyol with a siloxane-based polymer containing a silane functional group. More specifically, the hydroxy group of the acrylic-based polyol can form a crosslink with the silane functional group of the siloxane-based polymer through a hydrosilylation reaction. The hydrosilylation reaction can proceed rapidly under a Pt-based catalyst even at relatively low temperature (e.g., a temperature around 60°C). Therefore, the hologram recording medium according to one embodiment of the disclosure employs a polymer matrix that can be quickly crosslinked even at relatively low temperature as a support, thereby being able to improve the preparation efficiency and productivity.

The polymer matrix can enhance the mobility of components (e.g., photoreactive monomer or plasticizer, etc.) contained in the photopolymer layer due to the flexible main chain of the siloxane-based polymer. In addition, siloxane bonding having excellent heat resistance and moist heat resistance characteristics can facilitate ensuring reliability of the photopolymer layer in which optical information is recorded, and of the hologram recording medium including the same.

The polymer matrix may have a relatively low refractive index, which can serve to enhance the refractive index modulation of the photopolymer layer. For example, the upper limit of the refractive index of the polymer matrix may be 1.53 or less, 1.52 or less, 1.51 or less, 1.50 or less, or 1.49 or less. And, the lower limit of the refractive index of the polymer matrix may be, for example, 1.40 or more, 1.41 or more, 1.42 or more, 1.43 or more, 1.44 or more, 1.45 or more, or 1.46 or more. As used herein, "refractive index" may be a value measured with an Abbe refractometer at 25°C.

The photopolymer layer includes a polymer matrix formed by crosslinking the siloxane-based polymer containing a silane functional group and the acrylic-based polyol, but may include a precursor of the polymer matrix that is not crosslinked. At this time, the precursor of the polymer matrix may mean a siloxane-based polymer, an acrylic-based polyol, and a Pt-based catalyst.

The siloxane-based polymer may include, for example, a repeating unit represented by the following Chemical Formula 1 and a terminal end group represented by the following Chemical Formula 2.

[Chemical Formula 1]

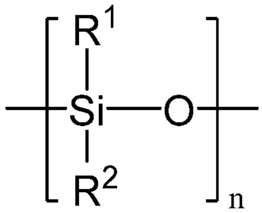

wherein, in Chemical Formula 1,

a plurality of $R^1$ and $R^2$ are the same or different from each other, and are each independently hydrogen, halogen, or an alkyl group having 1 to 10 carbon atoms, and

n is an integer of 1 to 10,000,

[Chemical Formula 2]

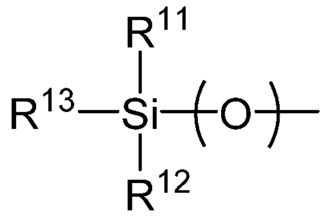

wherein, in Chemical Formula 2,

a plurality of $R^{11}$ to $R^{13}$ are the same or different from each other, and are each independently hydrogen, halogen, or an alkyl group having 1 to 10 carbon atoms, and

at least one of $R^1$, $R^2$ and $R^{11}$ to $R^{13}$ of at least one repeating unit selected among the repeating units represented by Chemical Formula 1 and any one terminal end group selected among the terminal end groups represented by Chemical Formula 2 is hydrogen.

In Chemical Formula 2, -(O)- means either bonding through oxygen(O) or directly bonding without oxygen(O) when Si of the terminal end group represented by Chemical Formula 2 is bonded to the repeating unit represented by Chemical Formula 1.

As used herein, "alkyl group" may be a straight chain, branched chain, or cyclic alkyl group. By way of non-limiting example, "alkyl group" as used herein may be methyl, ethyl, propyl (e.g. n-propyl, isopropyl, etc.), butyl (e.g., n-butyl, isobutyl, tert-butyl, sec-butyl, cyclobutyl, etc.), pentyl (e.g., n-pentyl, isopentyl, neopentyl, tert-pentyl, 1,1-dimethyl-propyl, 1-ethyl-propyl, 1-methyl-butyl, cyclopentyl, etc.), hexyl (e.g., n-hexyl, 1-methylpentyl, 2-methylpentyl, 4-methylpentyl, 3,3-dimethylbutyl, 1-ethylbutyl, 2-ethylbutyl, cyclopentylmethyl, cyclohexyl, etc.), heptyl (e.g., n-heptyl, 1-methylhexyl, 4-methylhexyl, 5-methylhexyl, cyclohexylmethyl, etc.), octyl (e.g., n-octyl, tert-octyl, 1-methylheptyl, 2-ethylhexyl, 2-propylpentyl, etc.), nonyl (e.g., n-nonyl, 2,2-dimethylheptyl, etc.), and the like.

In one example, $R^1$, $R^2$ and $R^{11}$ to $R^{13}$ in Chemical Formulas 1 and 2 are methyl or hydrogen, and at least two of $R^1$, $R^2$ and $R^{11}$ to $R^{13}$ may be hydrogen. More specifically, the siloxane-based polymer may be a compound in which $R^1$ and $R^2$ of Chemical Formula 1 are each independently methyl and hydrogen, and $R^{11}$ to $R^{13}$ of Chemical Formula 2 are each independently methyl or hydrogen (e.g., polymethylhydrosiloxane whose terminal end group is a trimethylsilyl group or a dimethylhydrosilyl group); a compound in which some $R^1$ and $R^2$ of Chemical Formula 1 are methyl and hydrogen, respectively, both the remaining $R^1$ and $R^2$ are methyl, and $R^{11}$ to $R^{13}$ of Chemical Formula 2 are each independently methyl or hydrogen (e.g., poly(dimethylsiloxane-co-methylhydrosiloxane) whose terminal end group is a trimethylsilyl group or a dimethylhydrosilyl group); or a compound in which both $R^1$ and $R^2$ of Chemical Formula 1 are methyl, at least one of $R^{11}$ to $R^{13}$ of Chemical Formula 2 is hydrogen, and the remainder are each independently methyl or hydrogen (e.g., polydimethylsiloxane in which either or both of the terminal end groups are dimethylhydrosilyl groups).

The siloxane-based polymer may have a number average molecular weight (Mn) in the range of 200 to 4,000 as an example. Specifically, the lower limit of the number average molecular weight of the siloxane-based polymer may be, for example, 200 or more, 250 or more, 300 or more, or 350 or more, and the upper limit thereof may be, for example, 3,500 or less, 3,000 or less, 2,500 or less, 2,000 or less, 1,500 or less, or 1,000 or less. When the number average molecular weight of the siloxane-based polymer satisfies the above range, it is possible to prevent the problems that during the crosslinking process with an acrylic-based polyol which is performed at room temperature or higher, the siloxane-based polymer volatilizes and the degree of matrix crosslinking decreases, or the siloxane-based polymer has poor compatibility with other components of the photopolymer layer and thus, phase separation occurs between the components, thereby allowing the hologram recording medium to exhibit excellent optical recording characteristics and moist heat resistance.

The number average molecular weight means a number average molecular weight (unit: g/mol) in terms of polystyrene determined by GPC method. In the process of determining the number average molecular weight in terms of polystyrene measured by the GPC method, a commonly known analyzing device, a detector such as a refractive index detector, and an analytical column can be used, and commonly applied conditions for temperature, solvent, and flow rate can be used. Specific examples of the measurement conditions may include a temperature of 30°C, tetrahydrofuran solvent and a flow rate of 1 mL/min.

The silane functional group (Si-H) equivalent of the siloxane-based polymer may be, for example, in the range of 30 to 200 g/equivalent. More specifically, the silane functional group (Si-H) equivalent of the siloxane-based polymer may be 50 g/equivalent or more, 60 g/equivalent or more, 70 g/equivalent or more, 80 g/equivalent or more, or 90 g/equivalent or more, and 180 g/equivalent or less, or 150 g/equivalent or less.

As used herein, "equivalent of a certain functional group" briefly refers to the number of gram equivalents (also called equivalent weight) expressed in units of g/equivalent, and means the value obtained by dividing the molecular weight (weight average molecular weight, number average molecular weight, etc.) of a molecule or polymer containing the

functional group by the number of the functional group. Therefore, as the equivalent value is smaller, the density of the functional group is higher, and as the equivalent value is larger, the density of the functional group is smaller.

When the silane functional group equivalent of the siloxane-based polymer satisfies the above range, the polymer matrix has an appropriate crosslinking density and thus, sufficiently performs the role of a support, and the mobility of the components included in the photopolymer layer is improved, which allows the initial refractive index modulation value to be maintained at an excellent level even as time passes without the problem of collapsing the boundary surfaces of the diffraction gratings generated after recording, thereby minimizing the decrease in recording properties for optical information.

The acrylic-based polyol may mean a polymer in which one or more, specifically two or more, hydroxy groups are bonded to the main chain or side chain of an acrylate-based polymer. Unless specifically stated otherwise, "acrylic-based" as used herein refers to one or more selected from the group consisting of acryloyl group, methacryloyl group and derivatives thereof, or a repeating unit formed by polymerization thereof. Unless specifically stated otherwise, "acrylate-based" as used herein refers to one or more selected from the group consisting of acrylate and methacrylate, or a repeating unit formed by polymerization thereof.

The acrylic-based polyol is a homopolymer of an acrylate-based monomer having a hydroxy group, a copolymer of two or more types of acrylate-based monomers having a hydroxy group, or a copolymer of an acrylate-based monomer having a hydroxy group and an acrylate-based monomer having no hydroxy group. As used herein, "copolymer" is a term that encompasses all of a random copolymer, a block copolymer and a graft copolymer, unless otherwise specified.

The acrylate-based monomer having a hydroxy group may include, for example, hydroxyalkyl (meth)acrylate, hydroxyaryl (meth)acrylate, or the like, the alkyl is an alkyl having 1 to 30 carbon atoms, and the aryl may be an aryl having 6 to 30 carbon atoms. Further, the acrylate-based monomer having no hydroxy group may include, for example, an alkyl (meth)acrylate, an aryl (meth)acrylate, or the like, the alkyl may be an alkyl having 1 to 30 carbon atoms, and the aryl may be an aryl having 6 to 30 carbon atoms. Unless specifically stated otherwise, "(meth)acrylate" as used herein refers to acrylate and/or methacrylate.

The acrylic-based polyol may have a weight average molecular weight (Mw) in the range of 150,000 to 1,000,000 as an example. The weight average molecular weight means a weight average molecular weight in terms of polystyrene measured by the GPC method as described above. For example, the lower limit of the weight average molecular weight may be 150,000 or more, 200,000 or more, or 250,000 or more, and the upper limit thereof may be, for example, 900,000 or less, 850,000 or less, 800,000 or less, 750,000 or less, 700,000 or less, 650,000 or less, 600,000 or less, 550,000 or less, 500,000 or less, or 450,000 or less. When the weight average molecular weight of the acrylic-based polyol satisfies the above range, the polymer matrix sufficiently exerts the function as a support and thus, the recording properties for optical information less decrease even after the usage time has passed, and sufficient flexibility is imparted to the polymer matrix, thereby being able to improve the mobility of components (e.g., photoreactive monomer or plasticizer, etc.) contained in the photopolymer layer, and minimize the decrease in recording properties for optical information.

In order to adjust the crosslinking density of the acrylic-based polyol by the siloxane-based polymer at a level that is advantageous for ensuring the function of the hologram recording medium, the hydroxyl equivalent of the acrylic-based polyol may be adjusted to an appropriate level.

Specifically, the hydroxyl (-OH) equivalent of the acrylic-based polyol may be, for example, in the range of 500 to 3,000 g/equivalent. More specifically, the lower limit of the hydroxyl group (-OH) equivalent of the acrylic-based polyol may be 600 g/equivalent or more, 700 g/equivalent or more, 800 g/equivalent or more, 900 g/equivalent or more, 1000 g/equivalent or more, 1100 g/equivalent or more, 1200 g/equivalent or more, 1300 g/equivalent or more, 1400 g/equivalent or more, 1500 g/equivalent or more, 1600 g/equivalent or more, 1700 g/equivalent or more, or 1750 g/equivalent or more. And, the upper limit of the hydroxyl group (-OH) equivalent of the acrylic-based polyol may be 2900 g/equivalent or less, 2800 g/equivalent or less, 2700 g/equivalent or less, 2600 g/equivalent or less, 2500 g/equivalent or less, 2400 g/equivalent or less, 2300 g/equivalent or less, 2200 g/equivalent or less, 2100 g/equivalent or less, 2000 g/equivalent or less, or 1900 g/equivalent or less.

When the hydroxyl (-OH) equivalent of the acrylic-based polyol satisfies the above range, the polymer matrix has an appropriate crosslinking density and thus, sufficiently performs the role of a support, and the mobility of the components included in the photopolymer layer is improved, which allows the initial refractive index modulation value to be maintained at an excellent level even as time passes without the problem of collapsing the boundary surfaces of the diffraction gratings generated after recording, thereby minimizing the decrease in recording properties for optical information.

For example, the acrylic-based polyol may have a glass transition temperature (Tg) in the range of -60 to -10°C. Specifically, the lower limit of the glass transition temperature may be, for example, -55°C or more, -50°C or more, -45°C or more, -40°C or more, -35°C or more, -30°C or more, or -25°C or more, and the upper limit thereof may be, for example, -15°C or less, -20°C or less, -25°C or less, -30°C or less, or -35°C or less. If the above glass transition temperature range is satisfied, it is possible to lower the glass transition temperature without significantly reducing the modulus of the polymer matrix, thereby increasing the mobility (fluidity) of other components in the photopolymer composition, and also improving the moldability of the photopolymer composition. The glass transition temperature can be measured using a known

method, for example, DSC (Differential Scanning Calorimetry) or DMA (dynamic mechanical analysis).

The refractive index of the acrylic-based polyol may be, for example, 1.40 or more and less than 1.50. Specifically, the lower limit of the refractive index of the acrylic-based polyol may be, for example, 1.41 or more, 1.42 or more, 1.43 or more, 1.44 or more, 1.45 or more, or 1.46 or more, and the upper limit thereof may be, for example, 1.49 or less, 1.48 or less, 1.47 or less, 1.46 or less, or 1.45 or less. When the acrylic-based polyol has a refractive index within the above-mentioned range, it can contribute to increasing the refractive index modulation. The refractive index of the acrylic-based polyol is a theoretical refractive index, and can be calculated using the refractive index (value measured using an Abbe refractometer at 25°C) of the monomer used for preparing the acrylic-based polyol and the fraction (molar ratio) of each monomer.

The acrylic-based polyol and the siloxane-based polymer can be included so that the molar ratio (SiH/OH) of the silane functional group (Si-H) of the siloxane-based polymer to the hydroxyl group (-OH) of the acrylic-based polyol is 1.5 to 4.

The molar ratio of the silane functional group of the siloxane-based polymer to the hydroxyl group of the acrylic-based polyol (hereinafter simply referred to as SiH/OH molar ratio) can be calculated from the number of moles of functional groups confirmed from the weight of each polymer and the corresponding functional group equivalent of each polymer.

Specifically, the silane functional group equivalent of the siloxane-based polymer is the value obtained by dividing the molecular weight (e.g., number average molecular weight) of the siloxane-based polymer by the number of silane functional groups per molecule, and the hydroxyl equivalent of the acrylic-based polyol is the value obtained by dividing the molecular weight (e.g., weight average molecular weight) of the acrylic-based polyol by the number of hydroxy functional groups per molecule. Therefore, if the weight of the siloxane-based polymer is divided by the silane functional group equivalent of the siloxane-based polymer, the number of moles of the silane functional group can be confirmed, and if the weight of the acrylic-based polyol is divided by the hydroxyl equivalent of the acrylic-based polyol, the number of moles of a hydroxy group can be confirmed. More specifically, looking at Example 1 described below, if the weight (2.5 g) of the siloxane-based polymer used in Example 1 is divided by the silane functional group equivalent (103 g/equivalent) of the siloxane-based polymer used in Example 1, the number of moles (0.024 mol) of a silane functional group is calculated, and if the weight (21.5 g) of the acrylic-based polyol used in Example 1 is divided by the hydroxyl equivalent (1802 g/equivalent) of the acrylic-based polyol used in Example 1, the number of moles (0.012 mol) of a hydroxyl group is calculated. If the number of moles (0.024 mol) of silane functional group is divided by the number of moles (0.012 mol) of a hydroxy group, it is confirmed that the SiH/OH molar ratio is calculated as 2.

The lower limit of the SiH/OH molar ratio may be, for example, 1.6 or more, 1.7 or more, 1.8 or more, 1.9 or more, or 2.0 or more, and the upper limit thereof can be, for example, 3.9 or less, 3.8 or less, 3.7 or less, 3.6 or less, or 3.5 or less. When the SiH/OH molar ratio range is satisfied, the polymer matrix is crosslinked at an appropriate crosslinking density to improve the mobility of recording components (e.g., photoreactive monomers and plasticizers, etc.) and ensure excellent optical recording characteristics, and even if the photopolymer layer is placed in a high temperature/high humidity environment after recording, it can suppress migration or deformation of the components within the photopolymer layer and moisture penetration into the photopolymer layer, thereby exhibiting excellent moist heat resistance or the like, and exhibiting transparent optical properties.

The Pt-based catalyst may be, for example, Karstedt's catalyst, and the like. The Pt-based catalyst may be contained in an amount of 0.01 to 2 parts by weight based on 100 parts by weight of the acrylic-based polyol. Specifically, the Pt-based catalyst may be contained, for example, in an amount of 0.02 parts by weight or more, 0.03 parts by weight or more, 0.04 parts by weight or more, 0.05 parts by weight or more, or 0.06 parts by weight or more, based on 100 parts by weight of the acrylic-based polyol. The Pt-based catalyst may be contained, for example, in an amount of 1.5 parts by weight or less, 1.0 parts by weight or less, 0.5 parts by weight or less, 0.3 parts by weight or less, 0.2 parts by weight or less, 0.15 parts by weight or less, 0.14 parts by weight or less, 0.13 parts by weight or less, or 0.12 parts by weight or less, based on 100 parts by weight of the acrylic-based polyol. When the Pt-based catalyst is used in the above-mentioned amount, the polymer matrix can be crosslinked at an appropriate crosslinking density to exhibit desired optical recording characteristics.

The precursor of the polymer matrix may optionally further include rhodiumbased catalysts, iridium-based catalysts, rhenium-based catalysts, molybdenum-based catalysts, iron-based catalysts, nickel-based catalysts, alkali metal or alkaline earth metal-based catalysts, Lewis acids-based or carbene-based non-metallic catalysts, in addition to the Pt-based catalyst.

On the other hand, in the hologram recording medium of one embodiment, optical information can be recorded by irradiating an object light and a reference light onto the photopolymer layer. Due to the interference field between the object light and the reference light, photopolymerization of the photoreactive monomer does not occur in the destructive interference region, but photopolymerization of the photoreactive monomer occurs in the constructive interference region. As the photoreactive monomer is continuously consumed in the constructive interference region, a concentration difference occurs between the photoreactive monomer in the destructive interference region and the constructive interference region, and as a result, the photoreactive monomer in the destructive interference region diffuses into the

constructive interference region. A diffraction grating is generated by the refractive index modulation thus generated.

Therefore, the photoreactive monomer may include a compound having a higher refractive index than the polymer matrix in order to realize the above-described refractive index modulation. However, all photoreactive monomers are not limited to those having a higher refractive index than the polymer matrix, and at least a part of the photoreactive monomers may have a higher refractive index than the polymer matrix, so as to realize a high refractive index modulation value. In one example, the photoreactive monomer may include a monomer having a refractive index of 1.50 or more, 1.51 or more, 1.52 or more, 1.53 or more, 1.54 or more, 1.55 or more, 1.56 or more, 1.57 or more, 1.58 or more, 1.59 or more, or 1.60 or more. The upper limit of the refractive index of the monomer included in the photoreactive monomer is not particularly limited, and may be, for example, 1.70 or less.

The photoreactive monomer may include at least one monomer selected from the group consisting of a monofunctional monomer having one photoreactive functional group and a multifunctional monomer having two or more photoreactive functional groups. Wherein, the photoreactive functional group may be, for example, a (meth)acryloyl group, a vinyl group, a thiol group, or the like. More specifically, the photoreactive functional group may be a (meth)acryloyl group.

The ratio of a monofunctional monomer in the photoreactive monomer is closely related to the compatibility of the components contained in the photopolymer layer. Specifically, the photoreactive monomer may contain 30 to 68% by weight of the monofunctional monomer based on the total weight of the photoreactive monomer. More specifically, the monofunctional monomer may be contained, for example, in an amount of 30% by weight or more, 31% by weight or more, 32% by weight or more, 33% by weight or more, 34% by weight or more, 35% by weight or more, 36% by weight or more, 37% by weight or more, 38% by weight or more, 39% by weight or more, 40% by weight or more, 41% by weight or more, 42% by weight or more, 43% by weight or more, 44% by weight or more, or 45% by weight or more, based on the total weight of the photoreactive monomer. The monofunctional monomer may be contained, for example, in an amount of 68% by weight or less, 67% by weight or less, 66% by weight or less, 65% by weight or less, 64% by weight or less, or 63% by weight or less, based on the total weight of the photoreactive monomer. If the weight ratio of the monofunctional monomer is less than the above range, the compatibility of the components contained in the photopolymer layer is poor, and the fluorine element ratio on the surface of the photopolymer layer increases, there may be a problem that haze of the hologram recording medium increases. In addition, if the weight ratio of the monofunctional monomer exceeds the above range, the crosslinking density of the photopolymer layer may decrease, resulting in increased tackiness and decreased optical recording characteristics.

The monofunctional monomer may include a monofunctional (meth)acrylate with a molecular weight of 85 to 500. Specifically, the monofunctional monomer may include, for example, at least one selected from the group consisting of benzyl (meth)acrylate (M1182 having a refractive index of 1.5140, Miwon Specialty Chemical), benzyl 2-phenylacrylate, phenoxybenzyl (meth)acrylate (M1122 having a refractive index of 1.565, Miwon Specialty Chemical), phenol (ethylene oxide) (meth)acrylate (M140 having a refractive index of 1.516, Miwon Specialty Chemical), phenol (ethylene oxide)$_2$ (meth)acrylate (phenol (EO)$_2$ (meth)acrylate; M142 having a refractive index of 1.510, Miwon Specialty Chemical), O-phenylphenol (ethylene oxide) (meth)acrylate (O-phenylphenol (EO) (meth)acrylate; M1142 having a refractive index of 1.577, Miwon Specialty Chemical), phenylthioethyl (meth)acrylate (M1162 having a refractive index of 1.560, Miwon Specialty Chemical) and biphenylmethyl (meth)acrylate.

The multifunctional monomer may include, for example, at least one selected from the group consisting of bisphenol A (ethylene oxide)$_{2\sim10}$ di(meth)acrylate (bisphenol A (EO)$_{2\sim10}$ (meth)acrylate; M240 having a refractive index of 1.537, M241 having a refractive index of 1.529, M244 having a refractive index of 1.545, M245 having a refractive index of 1.537, M249 having a refractive index of 1.542, M2100 having a refractive index of 1.516, M2101 having a refractive index of 1.512, Miwon Specialty Chemical), bisphenol A epoxy di(meth)acrylate (PE210 having a refractive index of 1.557, PE2120A having a refractive index of 1.533, PE2120B having a refractive index of 1.534, PE2020C having a refractive index of 1.539, PE2120S having a refractive index of 1.556, Miwon Specialty Chemical), bisfluorene di(meth)acrylate (HR6022 having a refractive index of 1.600, HR6040 having a refractive index of 1.600, HR6042 having a refractive index of 1.600, Miwon Specialty Chemical), modified bisphenol fluorene di(meth)acrylate (HR 6060 having a refractive index of 1.584, HR6100 having a refractive index of 1.562, HR6200 having a refractive index of 1.530, Miwon Specialty Chemical), tris(2-hydroxyethyl)isocyanurate tri(meth)acrylate (M370 having a refractive index of 1.508, Miwon Specialty Chemical), phenol novolac epoxy (meth)acrylate (SC6300 having a refractive index of 1.525, Miwon Specialty Chemical) and cresol novolac epoxy (meth)acrylate (SC6400 having a refractive index of 1.522, SC6400C having a refractive index of 1.522, Miwon Specialty Chemical).

The photopolymer layer may contain a photoreactive monomer in an amount of 50 to 300 parts by weight based on 100 parts by weight of the polymer matrix. For example, the lower limit of the content of the photoreactive monomer may be 50 parts by weight or more, 70 parts by weight or more, 100 parts by weight or more, or 110 parts by weight or more. The upper limit of the content of the photoreactive monomer may be 300 parts by weight or less, 290 parts by weight or less, 280 parts by weight or less, or 270 parts by weight or less. At this time, the content of the polymer matrix as a standard means the total content (weight) of the acrylic-based polyol and siloxane-based polymer forming the matrix. When the above

range is satisfied, it is possible to provide a photopolymer layer that exhibits excellent optical recording characteristics, heat resistance and moist heat resistance and high transparency.

The photopolymer layer includes a photoinitiator system. The photoinitiator system may mean a photoinitiator that enables polymerization to initiate by light, or a combination of a photosensitizer and a coinitiator.

The photopolymer layer may include a photosensitizer and a coinitiator as a photoinitiator system.

As the photosensitizer, a photosensitive dye can be used. Specifically, the photosensitive dye may include, for example, at least one selected from the group consisting of a silicon rhodamine compound, a sulfonium derivative of ceramidonine, new methylene blue, thioerythrosine triethylammonium, 6-acetylamino-2-methylceramidonin, eosin, erythrosine, rose bengal, thionine, basic yellow, Pinacyanol chloride, rhodamine 6G, gallocyanine, ethyl violet, Victoria blue R, Celestine blue, Quinaldine Red, Crystal violet, Brilliant Green, Astrazon orange G, darrow red, pyronin Y, basic red 29, pyrylium I (pyrylium iodide), Safranin O, cyanine, methylene blue, Azure A, and BODIPY. In one example, Cy3 and Cy5 (H-Nu 640, Spectra Group Limited) can be used as the cyanine dyes.

The photopolymer layer may include the photosensitive dye in an amount of 0.01 to 10 parts by weight based on 100 parts by weight of the polymer matrix. Specifically, the lower limit of the content of the photosensitive dye may be, for example, 0.02 parts by weight or more, 0.03 parts by weight or more, or 0.05 parts by weight or more. The upper limit of the content of the photosensitive dye may be, for example, 5 parts by weight or less. When the above range is satisfied, it is advantageous for exhibiting an appropriate polymerization reaction rate and ensuring desired optical recording characteristics.

The coinitiator may be an electron donor, an electron acceptor, or a mixture thereof.

In one example, the photopolymer composition may include an electron donor as a coinitiator. The electron donor may include, for example, a borate anion represented by the following Chemical Formula 3.

[Chemical Formula 3] $BX^1X^2X^3X^4$

wherein, in Chemical Formula 3, $X^1$ to $X^4$ are each independently an alkyl group having 1 to 20 carbon atoms, an alkenyl group having 2 to 20 carbon atoms, an aryl group having 6 to 30 carbon atoms, an arylalkyl group having 7 to 30 carbon atoms, an alkylaryl group having 7 to 30 carbon atoms, or an allyl group, each of which is substituted or unsubstituted, with the proviso that at least one of $X^1$ to $X^4$ is not an aryl group.

When the alkyl group having 1 to 20 carbon atoms, the alkenyl group having 2 to 20 carbon atoms, the aryl group having 6 to 30 carbon atoms, the arylalkyl group having 7 to 30 carbon atoms, the alkylaryl group having 7 to 30 carbon atoms, or the allyl group is substituted, it may be substituted with at least one selected from the group consisting of a halogen, a vinyl group, a haloalkyl group having 1 to 5 carbon atoms, and an alkoxy group having 1 to 5 carbon atoms.

Specifically, $X^1$ to $X^3$ may be each independently phenyl, methylphenyl, naphthyl or methylnaphthyl which is substituted or unsubstituted with at least one substituent selected from the group consisting of halogen, vinyl, trifluoromethyl and methoxy groups, and $X^4$ may be a straight chain alkyl group having 1 to 12 carbon atoms.

More specifically, the borate anion represented by Chemical Formula 3 may be, for example, at least one selected from the group consisting of borate anions represented by the following Chemical Formula 3-1 and 3-2.

[Chemical Formula 3-1]

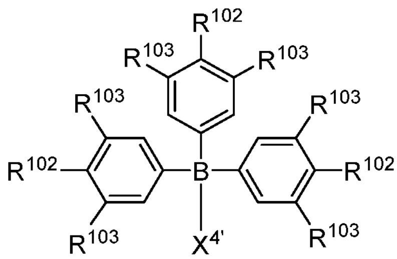

wherein, in Chemical Formula 3-1,
each $R^{102}$ is independently methyl or halogen,
each $R^{103}$ is independently hydrogen, methyl or halogen, with the proviso that it is halogen if the adjacent $R^{102}$ is methyl, and
$X^{4'}$ is a straight chain alkyl group having 1 to 12 carbon atoms,

[Chemical Formula 3-2]

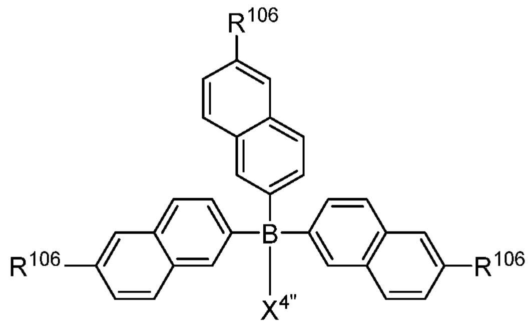

wherein, in Chemical Formula 3-2,
each $R^{106}$ is independently hydrogen, methyl or halogen, and
$X^{4''}$ is a straight chain alkyl group having 1 to 12 carbon atoms.

In Chemical Formula 3-2, each $R^{106}$ may be independently hydrogen, methyl, or halogen, with the proviso that at least one thereof may be halogen.

When borate anions represented by the following Chemical Formulas 3-1 and 3-2 are used as the electron donor, excellent heat resistance can be ensured even before recording.

In Chemical Formulas 3-1 and 3-2, the halogen may be fluorine or chlorine. Among these, chlorine can ensure more excellent heat resistance.

The cation bonded to the borate anion does not absorb light, and may be at least one cation selected from the group consisting of an alkali metal cation, a quaternary ammonium cation, and a nitrogen-containing heterocyclic cation.

The alkali metal cation may be, for example, at least one selected from the group consisting of lithium, sodium, potassium, rubidium, and cesium.

The quaternary ammonium cation may be an ammonium cation in which nitrogen (N) is substituted with four substituents, or a cyclic ammonium cation in which two substituents substituted on nitrogen are connected with each other, or a mixture thereof.

Specifically, the quaternary ammonium cation may be a cation represented by the following Chemical Formula 3-3.

[Chemical Formula 3-3] $NY^1Y^2Y^3Y^4$

wherein, in Chemical Formula 3-3, two substituents of $Y^1$ to $Y^4$ may or may not be connected with each other to form an aliphatic ring having 4 to 10 carbon atoms, and
$Y^1$ to $Y^4$, which do not form an aliphatic ring, are each independently an alkyl group having 1 to 40 carbon atoms, an aryl group having 6 to 30 carbon atoms, an arylalkyl group having 6 to 40 carbon atoms, or an alkyl group having 2 to 40 carbon atoms connected through an ester bond (e.g.,$-CH_2CH_2-O-CO-CH_2CH_2CH_3$,etc.),
with the proviso that a case where $Y^1$ to $Y^4$ are all methyl groups, or two or more substituents are alkyl groups having 16 or more carbon atoms is excluded.

In Chemical Formula 3-3, if $Y^1$ to $Y^4$ are all methyl groups, or two or more substituents are alkyl groups having 16 or more carbon atoms, the electron donor may not dissolve well in the photopolymer composition, and thus may not exhibit desired optical recording characteristics.

Specifically, among $Y^1$ to $Y^4$, two substituents may be connected with each other to form piperidine or pyrrolidine.

Among the $Y^1$ to $Y^4$, the substituents that do not form an aliphatic ring may each independently be a straight chain alkyl group having 1 to 32 carbon atoms, a phenyl group, a benzyl group, or $-CH_2CH_2-O-CO-CH_2CH_2CH_3$. More specifically, among the $Y^1$ to $Y^4$, the substituents that do not form an aliphatic ring may be each independently a methyl group, a butyl group, a hexadecyl group, a hentriacontyl group, a phenyl group, or a benzyl group.

The nitrogen-containing heterocyclic cation may be a heteroaromatic ring cation containing one or more nitrogen. Examples of such heteroaromatic ring cations include cations of pyrrole, pyrazole, imidazole, or pyridine, and the hydrogen thereof may be substituted or unsubstituted.

In one example, the nitrogen-containing heterocyclic cation may be a cation represented by the following Chemical Formula 3-4.

[Chemical Formula 3-4]

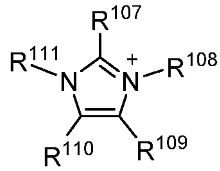

wherein, in Chemical Formula 3-4, $R^{107}$, $R^{109}$ and $R^{110}$ are each independently hydrogen, an alkyl group having 1 to 40 carbon atoms, an aryl group having 6 to 30 carbon atoms, an arylalkyl group having 6 to 40 carbon atoms, or an alkyl group having 2 to 40 carbon atoms connected through an ester bond (e.g., $-CH_2CH_2-O-CO-CH_{2C}H_{2C}H_3$, etc.), and $R^{108}$ and $R^{111}$ are each independently an alkyl group having 1 to 40 carbon atoms, an aryl group having 6 to 30 carbon atoms, an arylalkyl group having 6 to 40 carbon atoms, or an alkyl group having 2 to 40 carbon atoms connected through an ester bond (e.g., $-CH_2CH_2-O-CO-CH_2CH_2CH_3$, etc.).

Specifically, $R^{107}$, $R^{109}$, and $R^{110}$ may be each independently hydrogen or an aryl group having 6 to 30 carbon atoms. More specifically, $R^{107}$, $R^{109}$, and $R^{110}$ may be each independently hydrogen or a phenyl group.

Specifically, the $R^{108}$ and $R^{111}$ may be a straight chain alkyl group having 1 to 40 carbon atoms or an arylalkyl group having 6 to 40 carbon atoms. More specifically, the $R^{108}$ and $R^{1H}$ may be a hexadecyl group or a benzyl group.

The cation bonded to the borate anion may include, for example, at least one selected from the group consisting of tetrabutyl ammonium cation, hexadecyl dimethyl benzyl ammonium cation, hentriacontyl dimethyl benzyl ammonium cation, hexadecyl benzyl piperidinium cation, hexadecyl benzyl pyrrolidinium cation, 1-hexadecyl-3-benzylimidazolium cation and 1,3-dihexadecyl-2-phenylimidazolium cation.

However, the cation bonded to the borate anion is not limited to the above-mentioned cations, and even if it shows poor solubility when contained alone, some of the above-mentioned cations may be substituted with other cations known in the related art, as long as it can show adequate solubility when mixed with the above-mentioned cations. By way of non-limiting example, some of the above-mentioned cations may be substituted with 1,2-dicyclohexyl-4,4,5,5-tetramethylbiguanidium, etc.

In one example, the photopolymer layer may include an electron acceptor as a coinitiator. The electron acceptor may include, for example, onium salts such as sulfonium salts and iodonium salts; triazine compounds such as tris(trihalomethyl)triazine, substituted bis(trihalomethyl)triazine, etc.; or a mixture thereof.

In one example, the electron acceptor may include (4-(octyloxy)phenyl)(phenyl)iodonium salt as an iodonium salt, or 2-(4-methoxyphenyl)-4,6-bis(trichloromethyl)-1,3,5-triazine as the triazine compound. Examples of the electron acceptor include commercially available H-Nu 254 (Spectra Group) or 2-(4-methoxyphenyl)-4,6-bis(trichloromethyl)-1,3,5-triazine (TCI America).

The photopolymer layer may include the coinitiator in the range of 0.05 to 10 parts by weight based on 100 parts by weight of the polymer matrix. Specifically, the lower limit of the content of the coinitiator may be, for example, 0.1 parts by weight or more, 0.5 parts by weight or more, 1 parts by weight or more, 1.5 parts by weight or more, or 2 parts by weight or more. The upper limit of the content of the coinitiator may be, for example, 5 parts by weight or less. When the above range is satisfied, it is advantageous for showing an appropriate polymerization reaction rate and ensuring the desired optical recording characteristics.

The photoinitiator system may include an additional photoinitiator in order to remove the color of the photosensitive dye and react all unreacted photoreactive monomers after light irradiation for recording. The photoinitiator may include, for example, imidazole derivatives, bisimidazole derivatives, N-aryl glycine derivatives, organic azide compounds, titanocene, aluminate complex, organic peroxide, N-alkoxy pyridinium salt, thioxanthone derivatives, amine derivatives, diazonium salt, sulfonium salt, iodonium salt, sulfonic acid ester, imide sulfonate, dialkyl-4-hydroxy sulfonium salt, aryl sulfonic acid-p-nitrobenzyl ester, silanol-aluminum complex, (η6-benzene) (η5-cyclopentadienyl)iron(II), benzoin tosylate, 2,5-dinitro benzyl tosylate, N-tosylphthalic acid imide or mixtures thereof, etc. More specifically, the photoinitiator may include 1,3-di(t-butyldioxycarbonyl)benzophenone, 3,3',4,4"-tetrakis(t-butyldioxycarbonyl)benzophenone, 3-phenyl-5-isoxazolone, 2-mercapto benzimidazole, bis(2,4,5-triphenyl)imidazole, 2,2-dimethoxy-1,2-diphenylethane-1-one (product name: Irgacure 651 / manufacturer: BASF), 1-hydroxy-cyclohexyl-phenyl-ketone (product name: Irgacure 184 / Manufacturer: BASF), 2-benzyl-2-dimethylamino-1-(4-morpholinophenyl)-butanone-1 (product name: Irgacure 369 / Manufacturer: BASF), bis(η5-2,4-cyclopentadiene-1-yl)-bis(2,6-difluoro-3-(1H-pyrrole-1-yl)-phenyl)titanium (product name: Irgacure 784 / Manufacturer: BASF), Ebecryl P-115 (manufacturer: SK Entis), Cyracure UVI-6970, Cyracure UVI-6974, Cyracure UVI-6990 (manufacturer: Dow Chemical Co. in USA), Irgacure 264, Irgacure 250 (manufacturer: BASF), CIT-1682 (manufacturer: Nippon Soda) or mixtures thereof, but are not limited thereto.

The photopolymer layer may contain the photoinitiator in the range of 0.05 to 10 parts by weight based on 100 parts by weight of the polymer matrix. Specifically, the lower limit of the content of the photoinitiator may be, for example,

0.1 parts by weight or more, 0.5 parts by weight or more, 1 parts by weight or more, 1.5 parts by weight or more, or 2 parts by weight or more. The upper limit of the content of the photoinitiator may be, for example, 5 parts by weight or less. If the above range is satisfied, after optical information is recorded on the photopolymer layer, the reaction of the photoreactive monomer is effectively terminated, and the color of the photoreactive dye is decolorized, thereby providing a transparent hologram recording medium.

The photopolymer layer may include a fluorinated compound as a plasticizer. The plasticizer can more easily realize refractive index modulation upon recording a hologram recording medium. More specifically, the plasticizer lowers the glass transition temperature of the polymer matrix, improves the mobility of the photoreactive monomer, and has a low refractive index and non-reactive properties. Thus, when a photoreactive monomer that is uniformly distributed within the polymer matrix but is not photopolymerized moves, it can move in the direction opposite thereto and contribute to the refractive index modulation. Further, the plasticizer can also contribute to improving the moldability of photopolymer compositions.

The fluorinated compound may have a low refractive index of 1.45 or less in order to perform the above-mentioned plasticizer function. Specifically, the upper limit of the refractive index may be, for example, 1.44 or less, 1.43 or less, 1.42 or less, 1.41 or less, 1.40 or less, 1.39 or less, 1.38 or less, or 1.37 or less. The lower limit of the refractive index may be, for example, 1.30 or more, 1.31 or more, 1.32 or more, 1.33 or more, 1.34 or more, or 1.35 or more. Since a fluorinated compound having a lower refractive index than the above-mentioned photoreactive monomer is used, the refractive index of the polymer matrix can be further lowered, and the refractive index modulation with the photoreactive monomer can be made larger.

The fluorinated compound may include, for example, at least one functional group selected from the group consisting of an ether group, an ester group and an amide group, and two or more difluoromethylene groups. More specifically, the fluorinated compound may be, for example, a compound containing a repeating unit represented by the following Chemica Formula 4.

[Chemical Formula 4]

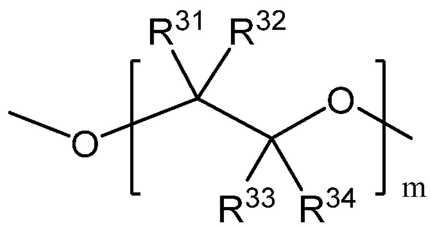

wherein, in Chemical Formula 4,

a plurality of $R^{31}$ to $R^{34}$ are each independently hydrogen or fluorine, with the proviso that at least one of $R^{31}$ to $R^{34}$ is fluorine, and m is an integer of 2 to 12.

More specifically, the fluorinated compound may be a compound containing 1 to 3 units represented by the following Chemical Formula 4-1.

[Chemical Formula 4-1]

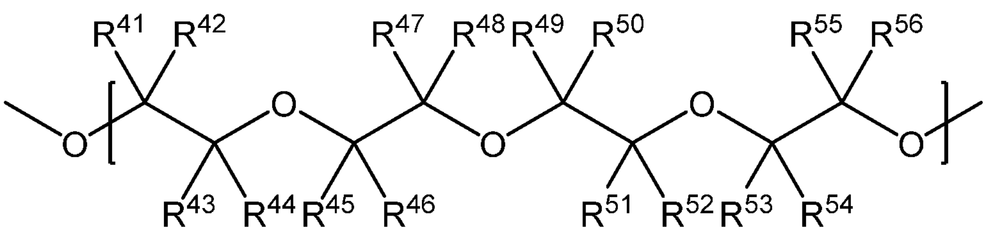

wherein, in Chemical Formula 4-1,

$R^{41}$ to $R^{44}$ and $R^{53}$ to $R^{56}$ are each independently hydrogen or fluorine, and $R^{45}$ to $R^{52}$ are fluorine.

In one example, in Chemical Formula 4-1, $R^{41}$, $R^{42}$, $R^{55}$, and $R^{56}$ are hydrogen, and $R^{43}$ to $R^{54}$ are fluorine.

The fluorinated compound containing (repeating) units represented by Chemical Formulas 4 and 4-1 are not particularly limited, but can be capped with an end capping agent widely used in the related technical field. In one example, the terminal end of the fluorinated compound containing the (repeating) unit represented by Chemical Formulas 4 and 4-1 may be an alkyl group or an alkyl group substituted with at least one alkoxy. By way of non-limiting example, 2-methoxyethoxymethyl chloride is used as an end capping agent and thus, the terminal end of the fluorinated compound

containing the (repeating) unit represented by Chemical Formulas 4 and 4-1 may be a 2-methoxyethoxymethyl group.

The fluorinated compound may have a weight average molecular weight of 300 or more. Specifically, the lower limit of the weight average molecular weight of the fluorinated compound may be, for example, 350 or more, 400 or more, 450 or more, 500 or more, or 550 or more. The upper limit of the weight average molecular weight of the fluorinated compound may be, for example, 1000 or less, 900 or less, 800 or less, 700 or less, or 600 or less. Considering refractive index modulation, compatibility with other components, elution problems of fluorinated compounds, and the like, it is preferable that the above weight average molecular weight range is satisfied. At this time, the weight average molecular weight means the weight average molecular weight in terms of polystyrene measured by the GPC method as described above.

The photopolymer layer may include 20 to 200 parts by weight of the fluorinated compound based on 100 parts by weight of the polymer matrix. Specifically, the lower limit of the content of the fluorinated compound may be, for example, 25 parts by weight or more, 30 parts by weight or more, 40 parts by weight or more, 50 parts by weight or more, 60 parts by weight or more, or 70 parts by weight or more. The upper limit of the content of the fluorinated compound may be, for example, 190 parts by weight or less, 180 parts by weight or less, 170 parts by weight or less, 160 parts by weight or less, or 155 parts by weight or less. When the above range is satisfied, it can represent large refractive index modulation values after recording due to fluorinated compounds having sufficient low refractive index, without problems of deteriorating the compatibility with the components contained in the photopolymer layer, of eluting some fluorinated compounds to the surface of the photopolymer layer, or of degrading haze, which are thus advantageous for ensuring excellent optical recording characteristics.

Most of the components of the photopolymer layer can be said to be a polymer matrix, a photoreactive monomer, and a fluorinated compound. Therefore, the element ratio of the surface of the photopolymer layer can be controlled through the mixing ratio of the polymer matrix, photoreactive monomer, and fluorinated compound. The photopolymer layer may contain 17 to 38% by weight of the polymer matrix, 38 to 58% by weight of the photoreactive monomer, and 17 to 38% by weight of the fluorinated compound, based on the total weight of the polymer matrix, photoreactive monomer, and fluorinated compound, in order to satisfy the above-mentioned element ratio.

More specifically, the polymer matrix may be contained, for example, in an amount of 17% by weight or more, 18% by weight or more, 19% by weight or more, or 20% by weight or more. The polymer matrix may be contained, for example, in an amount of 38% by weight or less, 37% by weight or less, or 36% by weight or less. The photoreactive monomer may be contained, for example, in an amount of 38% by weight or more, 39% by weight or more, 40% by weight or more, 41% by weight or more or 42% by weight or more. The photoreactive monomer may be contained, for example, in an amount of 58% by weight or less, 55% by weight, or less or 53% by weight or less. The fluorinated compound may be contained, for example, in an amount of 17% by weight or more, 18% by weight or more, 19% by weight or more, or 20% by weight or more. The fluorinated compound may be contained, for example, in an amount of 38% by weight or less, 35% by weight or less, 33% by weight or less, or 32% by weight or less. Within this range, it is possible to provide a photopolymer layer that satisfies the above-mentioned element ratio.

The photopolymer layer may further include additives such as a surfactant or an antifoaming agent.

The photopolymer layer may include a silicone-based surfactant, a fluorine-based surfactant, or a mixture thereof as a surfactant.

As the silicone-based surfactant, for example, BYK-077, BYK-085, BYK-300, BYK-301, BYK-302, BYK-306, BYK-307, BYK-310, BYK-320, BYK-322, BYK-323, BYK-325, BYK-330, BYK-331, BYK-333, BYK-335, BYK-341v344, BYK-345v346, BYK-348, BYK-354, BYK355, BYK-356, BYK-358, BYK-361, BYK-370, BYK-371, BYK-375, BYK-380, BYK-390, BYK-3550 (manufactured by BYK Chemie), and the like can be used. As the fluorine-based surfactant, F-114, F-177, F-410, F-411, F-450, F-493, F-494, F-443, F-444, F-445, F-446, F-470, F-471, F-472SF, F-474, F-475, F-477, F-478, F-479, F-480SF, F-482, F-483, F-484, F-486, F-487, F-172D, MCF-350SF, TF-1025SF, TF-1117SF, TF-1026SF, TF-1128, TF-1127, TF1129, TF-1126, TF-1130, TF-1116SF, TF-1131, TF1132, TF1027SF, TF-1441, TF-1442 (manufactured by DaiNippon Ink & Chemicals), and the like can be used.

If the photopolymer layer includes a surfactant, the surfactant may be contained in an amount of 0.01 parts by weight or more, 0.02 parts by weight, 0.03 parts by weight or more, or 0.05 parts by weight or more, and 5 parts by weight or less, or 3 parts by weight or less, based on 100 parts by weight of the polymer matrix. When the above range is satisfied, it can impart excellent adhesion and release properties to the photopolymer layer, and thus preserve excellent optical recording characteristics.

The photopolymer layer may include a silicone-based reactive additive as an antifoaming agent. As the silicone-based reactive additive, for example, commercially available products such as Tego Rad 2500 can be used. The content of the antifoaming agent can be appropriately adjusted at a level that does not impede the function of the hologram recording medium.

The photopolymer layer may be formed from a photopolymer composition comprising a solvent.

The solvent may be an organic solvent, and an example thereof may be at least one organic solvent selected from the group consisting of ketones, alcohols, acetates, and ethers, but is not limited thereto. Specific examples of such

organic solvents include at least one selected from the group consisting of ketones such as methyl ethyl ketone, methyl isobutyl ketone, acetylacetone, or isobutyl ketone; alcohols such as methanol, ethanol, n-propanol, i-propanol, n-butanol, i-butanol, or t-butanol; acetates such as ethyl acetate, i-propyl acetate, or polyethylene glycol monomethyl ether acetate; and ethers such as tetrahydrofuran or propylene glycol monomethyl ether.

The organic solvent may be added at the time point when respective components contained in the photopolymer composition are mixed, or may be included in the photopolymer composition while respective components are added in a state of being dispersed or mixed in an organic solvent.

The photopolymer composition may include a solvent such that the solid content concentration is 1 to 90% by weight. Specifically, the photopolymer composition may include a solvent such that the solid concentration is 20% by weight or more, 25% by weight or more, or 30% by weight or more, and 50% by weight or less, 45% by weight or less, or 40% by weight or less. Within this range, the photopolymer composition exhibits appropriate flowability and can form a coating layer without defects such as stripes. No defects occur during the drying and curing process and thus, a photopolymer layer exhibiting desired physical properties and surface properties can be formed.

The hologram recording medium of one embodiment has excellent refractive index modulation, diffraction efficiency, and driving reliability despite having a photopolymer layer of thin thickness.

The thickness of the photopolymer layer may be, for example, in the range of 5.0 to 40.0 $\mu$m. Specifically, the lower limit of the thickness of the photopolymer layer may be, for example, 6 $\mu$m or more, 7 $\mu$m or more, 8 $\mu$m or more, or 9 $\mu$m or more. And, the upper limit of the thickness may be, for example, 35 $\mu$m or less, 30 $\mu$m or less, 29 $\mu$m or less, 28 $\mu$m or less, 27 $\mu$m or less, 26 $\mu$m or less, 25 $\mu$m or less, 24 $\mu$m or less, 23 $\mu$m or less, 22 $\mu$m or less, 21 $\mu$m or less, 20 $\mu$m or less, 19 $\mu$m or less, or 18 $\mu$m or less.

The hologram recording medium according to one embodiment of the disclosure may further include a substrate on at least one surface of the photopolymer layer. The type of the substrate is not particularly limited, and those known in the related technical field can be used. For example, substrates such as glass, PET (polyethylene terephthalate), TAC (triacetyl cellulose), PC (polycarbonate), or COP (cycloolefin polymer) can be used.

The hologram recording medium according to one embodiment of the disclosure can have high diffraction efficiency. In one example, the hologram recording medium may have a diffraction efficiency of 80% or more upon recording a notch filter hologram. Wherein, the thickness of the photopolymer layer may be, for example, 5 to 30 $\mu$m. Specifically, when recording the notch filter hologram, the diffraction efficiency may be 85% or more, 86% or more, 87% or more, 88% or more, 89% or more, 90% or more, 91% or more, 92% or more, 93% or more, 94% or more, 95% or more or 96% or more. In one example, when red dye or green dye is used as a photosensitive dye and a notch filter hologram is recorded, the diffraction efficiency may be, for example, 86% or more, 87% or more, 88% or more, 89% or more, 90% or more, 91% or more, 92% or more, 93% or more, 94% or more, 95% or more or 96% or more. In this manner, the hologram recording medium according to one embodiment of the disclosure can realize excellent diffraction efficiency even if it includes a photopolymer layer of thin thickness. The diffraction efficiency can be measured by the method described in the Test Example described below.

On the other hand, since the hologram recording medium uses a mixture of a component having a low refractive index and a component having a high refractive index to record optical properties, it tends to have opaque characteristics due to their compatibility. However, as the hologram recording medium of one embodiment includes a photopolymer layer that satisfies a specific fluorine element ratio, it exhibits highly transparent optical properties.

In one example, the haze of the hologram recording medium may be 2% or less. The upper limit of the haze may be, for example, 2.0% or less, 1.9% or less, 1.8% or less, 1.7% or less, 1.6% or less, 1.5% or less, 1.4% or less, 1.3% or less, 1.2% or less, 1.1% or less, 1.0% or less, or 0.9% or less. The lower limit of the haze is not particularly limited, and may be 0% or more. The haze may be measured, for example, by the method described in Test Example described later.

The hologram recording medium of one embodiment exhibits excellent optical recording characteristics and highly transparent optical properties, and thus, is expected to provide a variety of optical elements having excellent visibility.

The hologram recording medium of one embodiment is not limited thereto, but may be a medium on which a reflective hologram or a transmissive hologram is recorded.

On the other hand, according to another embodiment of the disclosure, there is provided a method for preparing a hologram recording medium, comprising the steps of: applying a photopolymer composition to form a photopolymer layer, wherein the photopolymer composition comprises a polymer matrix formed by crosslinking a siloxane-based polymer containing a silane functional group and an acrylic-based polyol, or a precursor thereof; a fluorinated compound; a photoreactive monomer; and a photoinitiator system; and irradiating a coherent laser onto a predetermined region of the photopolymer layer and selectively polymerizing the photoreactive monomer contained in the photopolymer layer to record optical information, wherein based on the total amount of carbon, oxygen, fluorine and silicon atoms on the surface of the photopolymer layer confirmed by Electron Spectroscopy for Chemical Analysis (ESCA), an element ratio of fluorine is 0.05 to 3 atomic%.

The photopolymer layer having the specific fluorine element ratio may be a photopolymer layer included in the

hologram recording medium of the above-described embodiment, and the photopolymer layer has been previously described in detail, and therefore, a detailed description thereof is omitted here.

In the step of forming the photopolymer layer, a photopolymer composition containing the above-mentioned components can first be prepared. When preparing the photopolymer composition, for mixing each component, a commonly known mixer, stirrer, or the like can be used without particular restriction. Further, such a mixing process may be performed at a temperature ranging from 0°C to 100°C, a temperature ranging from 10°C to 80°C, or a temperature ranging from 20°C to 60°C.

In the step of forming the photopolymer layer, the prepared photopolymer composition can be applied to form a coating layer formed from the photopolymer composition. The coating layer can be dried at a temperature of 50°C or more, 55°C or more, 60°C or more, 65°C or more, or 70°C or more, and 120°C or less, 110°C or less, 100°C or less, or 90°C or less. Through this process, a hydrosilylation reaction between the hydroxyl group of the acrylic-based polyol remaining unreacted and the silane functional group of the siloxane-based polymer can be induced, thereby achieving the desired crosslinking density while maintaining high transparency.

In the photopolymer layer prepared through the step of forming the photopolymer layer, a fluorinated compound, a photoreactive monomer and a photoinitiator system, and additives added as necessary may be uniformly dispersed within the crosslinked polymer matrix.

Subsequently, in the step of recording optical information, if a coherent laser is irradiated onto the photopolymer layer, in the area where constructive interference occurs, polymerization of photoreactive monomers occurs to form a photopolymer, and in the area where destructive interference occurs, polymerization of the photoreactive monomer does not occur or is suppressed, so that the photoreactive monomer are present. Further, the unreacted photoreactive monomer causes refractive index modulation while diffusion occurs toward the photopolymer side where the concentration of photoreactive monomers is lower, and a diffraction grating is produced by the refractive index modulation. Thereby, holograms, i.e. optical information, are recorded on the photopolymer layer having the diffraction grating.

The method for preparing the hologram recording medium according to another embodiment of the disclosure may further include a step of photobleaching by irradiating light onto the entire photopolymer layer on which the optical information is recorded after the step of recording the optical information.

In the photobleaching step, ultraviolet rays are irradiated onto the photopolymer layer on which optical information is recorded to terminate the reaction of the photoreactive monomer remaining in the photopolymer layer, thereby removing the color of the photosensitive dye. In one example, in the photobleaching step, ultraviolet rays (UVA) in the range of 320 to 400 nm are irradiated to terminate the reaction of the photoreactive monomer and remove the color of the photosensitive dye.

On the other hand, according to yet another embodiment of the disclosure, there is provided an optical element comprising the hologram recording medium.

Specific examples of the optical elements may include smart devices such as mobile devices, parts of wearable displays, vehicle articles (e.g., head up display), holographic fingerprint recognition system, optical lenses, mirrors, deflecting mirrors, filters, diffusing screens, diffraction elements, light guides, waveguides, holographic optical elements having projection screen and/or mask functions, medium of optical memory system and light diffusion plate, optical wavelength multiplexers, reflection type, transmission type color filters, and the like.

An example of an optical element including the hologram medium may include a hologram display device. The hologram display device includes a light source unit, an input unit, an optical system, and a display unit.

Specifically, the light source unit is a portion that irradiates a laser beam used for providing, recording, and reproducing three-dimensional image information of an object in the input unit and the display unit.

The input unit is a portion that previously inputs three-dimensional image information of an object to be recorded on the display unit, specifically, a portion in which three-dimensional information of an object such as the intensity and phase of light for each space can be inputted into an electrically addressed liquid crystal SLM, wherein an input beam may be used.

The optical system may include a mirror, a polarizer, a beam splitter, a beam shutter, a lens, and the like. The optical system can be distributed into an input beam for sending a laser beam emitted from the light source unit to the input unit, a recording beam for sending the laser beam to the display unit, a reference beam, an erasing beam, a reading beam, and the like.

The display unit can receive three-dimensional image information of an object from an input unit, record it on a hologram plate comprising an optically addressed SLM, and reproduce the three-dimensional image of the object. At this time, the three-dimensional image information of the object can be recorded via interference of the input beam and the reference beam. The three-dimensional image information of the object recorded on the hologram plate can be reproduced into a three-dimensional image by the diffraction pattern generated by the reading beam. The erasing beam can be used to quickly remove the formed diffraction pattern. On the other hand, the hologram plate can be moved between a position at which a three-dimensional image is inputted and a position at which a three-dimensional image is reproduced.

## [Advantageous Effects]

The hologram recording medium according to one embodiment of the disclosure can have excellent optical recording characteristics and low haze by controlling an element ratio of fluorine on the surface of the photopolymer layer to a specific range, and can provide an optical element with excellent visibility.

## [BRIEF DESCRIPTION OF THE DRAWINGS]

FIG. 1 schematically shows the recording equipment setup for hologram recording. Specifically, FIG. 1 schematically shows the process in which a laser of a predetermined wavelength is radiated from the light source 10, and irradiated onto the PP (hologram recording medium) 80 located on one surface of a mirror 70 via mirrors 20 and 20', an iris 30, a spatial filter 40, an iris 30', a collimation lens 50, and PBS (Polarized Beam Splitter) 60.

## [DETAILED DESCRIPTION OF THE EMBODIMENTS]

Hereinafter, the action and effect of the invention will be described in more detail with reference to specific examples of the invention. However, these examples are presented for illustrative purposes only, and the scope of the invention is not limited thereby in any way.

In the following Preparation Examples, Examples, Comparative Examples, and the like, the content of raw materials, and the like means the content based on solid content, unless otherwise specified.

### Preparation Example 1: Preparation of acrylic-based polyol

132 g of butyl acrylate, 420 g of ethyl acrylate, and 48 g of hydroxybutyl acrylate were added to a 2 L jacketed reactor, and diluted with 1200 g of ethyl acetate. The reaction temperature was set to 60-70°C, and the mixture was stirred for about 30 minutes to 1 hour. 0.42 g of n-dodecyl mercaptan (n-DDM) was further added, and stirring was further performed for about 30 minutes. Then, 0.24 g of AIBN as a polymerization initiator was added, polymerization was performed at the reaction temperature for 4 hours or more, and kept until the residual acrylate content became less than 1%. Thereby, an acrylate-based copolymer (weight average molecular weight of about 300,000, OH equivalent of about 1802 g/equivalent) in which the hydroxy group was located in the branched chain was prepared.

### Preparation Example 2: Preparation of fluorinated compound

20.51 g of 2,2'-{oxybis[(1,1,2,2-tetrafluoroethane-2,1-diyl)oxy]}bis(2,2-difluoroethan-1-ol) was added to a 1000 mL flask, and dissolved in 500 g of tetrahydrofuran, to which 4.40 g of sodium hydride (60% dispersion in mineral oil) was carefully added several times while stirring at 0°C. After stirring at 0°C for 20 minutes, 12.50 mL of 2-methoxyethoxymethyl chloride was slowly added dropwise. When it was confirmed by 1H NMR that all the reactants were consumed, work-up using dichloromethane gave 29 g of a liquid product with a purity of 95% or more in a yield of 98%. The weight average molecular weight of the prepared fluorinated compound was 586, and the refractive index measured with an Abbe refractometer was 1.361.

### Example 1: Preparation of hologram recording medium

(1) Preparation of photopolymer composition

Trimethylsilyl terminated poly(methylhydrosiloxane) (Sigma-Aldrich, number average molecular weight: about 390, SiH equivalent: about 103 g/equivalent) as a siloxane-based polymer and acrylic-based polyol prepared in Preparation Example 1 were first mixed. The content of the acrylic-based polyol was 21.5 g, and the siloxane-based polymer was added so that the SiH/OH molar ratio was 2. In Example 1, 2.5 g of siloxane-based polymer was added.

Then, 48 g of photoreactive monomers in which bisfluorene diacrylate is mixed with O-phenylphenol (ethylene oxide) (meth)acrylate (OPPEA) at a weight ratio of 68:32, 0.2 g of H-Nu 640 (Spectra), a red dye, (as a photosensitive dye), 0.8 g of hexadecyl dimethyl benzyl ammonium tri(p-chlorophenyl)butyl borate, and 0.05 g of H-Nu 254 (Spectra) as a coinitiator, 0.9 g of Irgacure 369 as a photoinitiator, 24 g of a fluorinated compound prepared in Preparation Example 2 as a plasticizer, and 206 g of methyl isobutyl ketone (MIBK) as a solvent were added, and the mixture was stirred with a paste mixer for about 30 minutes while blocking light. After that, 0.014 g of Karstedt (Pt-based) catalyst was added for matrix crosslinking to prepare a photopolymer composition.

(2) Preparation of hologram recording medium

The photopolymer composition was coated to a predetermined thickness on a 60 μm thick TAC substrate using a Mayer bar, and dried at 80°C for 10 minutes. The thickness of the photopolymer layer after drying was about 15 μm.

The diffraction grating was recorded using the same setup as shown in FIG. 1. Specifically, when the prepared photopolymer layer was laminated on a mirror and then irradiated with a laser, a notch filter hologram with periodic refractive index modulation in the thickness direction could be recorded through interference between incident light (L) and light reflected from the mirror (L'). In this example, the notch filter hologram was recorded with an incident angle of 0° (degree). Notch filter and Bragg reflector are optical elements that reflect only light of a specific wavelength, and have a structure in which two layers with different refractive indices are stacked periodically and repeatedly at a constant thickness.

Examples 2 to 6 and Comparative Examples 1 to 3: Preparation of hologram recording medium

Hologram recording mediums were prepared in the same manner as in Example 1, except that the type and ratio of the monofunctional monomer in the photoreactive monomer and the type of photosensitive dye were changed as shown in Table 1 below.

That is, in Examples 2 and 3, photopolymer compositions were prepared using the same monofunctional monomer as in Example 1 except that while increasing the ratio of the monofunctional monomer to the total content of photoreactive monomers as shown in Table 1 below, the ratio of bisfluorene diacrylate, a multifunctional monomer, was decreased, and hologram recording mediums were prepared therefrom.

In Example 4, a hologram recording medium was prepared in the same manner as Example 2, except that phenoxybenzyl acrylate (PBA) was used as the monofunctional monomer.

In Example 5, a hologram recording medium was prepared in the same manner as Example 2, except that rhodamine 6G, a green dye, was used as the photosensitive dye instead of the red dye.

In Example 6, a hologram recording medium was prepared in the same manner as Example 2, except that Astrazone Orange G, a blue dye, was used as the photosensitive dye instead of the red dye.

In Comparative Example 1, a hologram recording medium was prepared in the same manner as Example 1, except that only bisfluorene diacrylate, a multifunctional monomer, was used as the photoreactive monomer.

In Comparative Examples 2 and 3, hologram recording mediums were prepared in the same manner as Example 1, except that the ratio of monofunctional monomer to the total content of photoreactive monomers was reduced or increased as shown in Table 1 below, and at the same time, the ratio of multifunctional monomer was controlled as much as monofunctional monomer was reduced or increased.

[Table 1]

| | Type of monofunctional monomer | Ratio of monofunctional monomer to total content of photoreactive monomer (% by weight) | Photosensitive dye |
|---|---|---|---|
| Example 1 | OPPEA | 32 | Red Dye |
| Example 2 | OPPEA | 50 | Red Dye |
| Example 3 | OPPEA | 63 | Red Dye |
| Example 4 | PBA | 50 | Red Dye |
| Example 5 | OPPEA | 50 | Green Dye |
| Example 6 | OPPEA | 50 | Blue Dye |
| Comparative Example 1 | - | 0 | Red Dye |
| Comparative Example 2 | OPPEA | 20 | Red Dye |
| Comparative Example 3 | OPPEA | 70 | Red Dye |

Comparative Example 4: Preparation of hologram recording medium

A hologram recording medium was prepared in the same manner as in Example 1, except that 31.4 g of acrylic-based polyol prepared in Preparation Example 1, 3.6 g of siloxane-based polymer, 35 g of HR 6042 (Miwon Specialty Chemical, refractive index of 1.60) as a photoreactive monomer, 0.2 g of a compound represented by the following

Chemical Formula a as a photosensitive dye, 30 g of a fluorinated compound prepared in Preparation Example 2 as a plasticizer were used.

[Chemical Formula a]

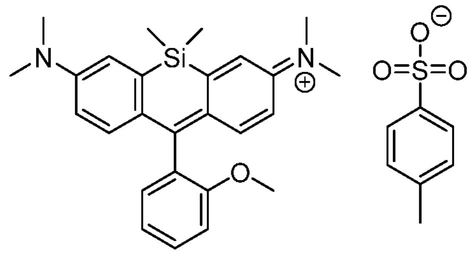

Test Example: Evaluation of performance of hologram recording medium

(1) Element ratio

The surface element ratio of a sample before recording was analyzed by the method described below.

Specifically, the sample to be analyzed was fixed onto a copper foil with a carbon tape and it was placed on the sample holder and fixed using a clip. Then, data were acquired using an Electron Spectrometer for Chemical Analysis (ESCA, model name: K-Alpha+, Thermo Fisher Scientific Inc.) according to the K-Alpha+ standard operating method (SOP-0524-Ok), and the element ratio (atomic%) of the sample surface was analyzed using Avantage software (version 5.980).

The system specifications of the ESCA device used are as follows.

- Base chamber pressure: 1.0 X $10^{-9}$ mbar
- X-ray source: monochromatic Al K$\alpha$ (1486.6 eV)
- X-ray spot size: 400 $\mu$m
- Mode: CAE (Constant Analyzer Energy) mode
- Charge compensation: Flood gun (FG03: 100 $\mu$A, 0.5 V)

Qualitative analysis was performed on the surface of the sample to be analyzed in the as-received state using an initial survey scan under the following conditions. Depending on the qualitative analysis results, quantitative analysis was performed through narrow scan (snap) for each element. The element ratios at three locations were confirmed for each sample, and the peak background smart method was applied for quantitative analysis. The binding energy correction of the core level spectrum was based on C1s (284.8 eV).

<Survey scan conditions>

- Scan section binding energy: -5 ~ 1350 eV
- Step size: 1 eV
- Per Point dwell time: 20 ms
- Periods: 2
- Pass energy: 200 eV

<Narrow scan conditions>

- Scan section binding energy: about 20 eV
- Step size: ~ 0.16 eV
- Per Point dwell time: 1 sec
- Periods: 10-30
- Pass energy: 150 eV

<Etching conditions>

- Source: Ar ion

- Energy: 6 keV
- Cluster size: 75
- Rater size: 1.6 x 1.0 $mm^2$
- Mode: GCIB

(2) Diffraction efficiency (DE)

Diffraction efficiency (η) was determined through the following Equation 1.

[Equation 1]

$$\eta\ (\%) = \{P_D / (P_D + P_T)\}\ X\ 100$$

wherein, in Equation 1, η is the diffraction efficiency, $P_D$ is the output amount (mW/ $cm^2$) of the diffracted beam of the sample after recording, and $P_T$ is the output amount (mW/$cm^2$) of the transmitted beam of the sample after recording.

(3) Haze

A 5 cm x 5 cm specimen was prepared from the sample on which the diffraction grating was recorded. The haze of the specimen was measured using a haze meter (HM-150, A light source, Murakami) in accordance with JIS K 7136. Haze measurement was performed a total of three times, and the average value was calculated and defined as the haze value of the sample.

[Table 2]

| | Element ratio | | | | DE (%) | Haze (%) |
|---|---|---|---|---|---|---|
| | C | O | F | Si | | |
| Example 1 | 77.05 | 19.25 | 0.2 | 3.5 | 96.5 | 1.9 |
| Example 2 | 78.0 | 18.3 | 1.1 | 2.6 | 93.2 | 1.7 |
| Example 3 | 77.9 | 17.9 | 2.7 | 1.5 | 88.6 | 1.1 |
| Example 4 | 74.5 | 21.2 | 2.1 | 2.2 | 91.6 | 1.5 |
| Example 5 | 73.45 | 18.65 | 0.1 | 7.8 | 92.5 | 0.9 |
| Example 6 | 71.2 | 23.6 | 0.1 | 5.1 | 81.0 | 1.8 |
| Comparative Example 1 | 75.9 | 16.5 | 5.95 | 1.65 | 95.8 | 3.2 |
| Comparative Example 2 | 65.7 | 21.9 | 5.3 | 7.1 | 94.0 | 2.9 |
| Comparative Example 3 | 76.5 | 19.4 | 0.02 | 4.08 | 72.9 | 0.9 |
| Comparative Example 4 | 64.42 | 25.93 | 8.14 | 1.51 | 85 | 1.1 |

Referring to Table 2, it is confirmed that the hologram recording medium according to one embodiment of the disclosure has excellent optical recording characteristics and low haze by controlling an element ratio of fluorine on the surface of the photopolymer layer in a range of 0.05 to 3 atomic%. It seems to be the result of improving the compatibility of the photopolymer composition by using a photoreactive monomer including a predetermined amount of monofunctional monomer.

Example 2, Example 5, and Example 6 show test results of hologram recording mediums manufactured using Red dye, Green dye, and Blue dye, respectively. Blue dyes generally tend to exhibit lower optical recording characteristics compared to other photosensitive dyes. Considering the feature of blue dyes, it is confirmed that the hologram recording medium according to one embodiment of the disclosure exhibits excellent optical recording characteristics and low haze in all red, green, and blue regions by controlling the element ratio of fluorine on the surface of the photopolymer layer to the above range.

On the other hand, in Comparative Examples 1 and 2, no or little monofunctional monomer was used, and the element ratio of fluorine on the surface of the photopolymer layer exceeded 3 atomic%. As a result, it is confirmed that the hologram recording mediums of Comparative Examples 1 and 2 exhibit high haze.

In Comparative Example 3, an excessive amount of monofunctional monomer was used, and the element ration of fluorine on the surface of the photopolymer layer was less than 0.05 atomic%. As a result, it is confirmed that the hologram recording medium of Comparative Example 3 exhibits very poor recording characteristics by decreasing the degree of cross-linking and increasing tackiness.

In Comparative Example 4, the content of the polymer matrix and the fluorinated compound increased as much as the content of the total photoreactive monomer decreased, and the element ratio of fluorine on the surface of the photopolymer layer exceeded 3 atomic%. As a result, it is confirmed that the hologram recording medium of Comparative Example 4 exhibits a good level of haze, but exhibits deteriorated recording characteristics.

## Claims

1. A hologram recording medium comprising: a photopolymer layer which includes a polymer matrix formed by crosslinking a siloxane-based polymer containing a silane functional group and an acrylic-based polyol; a photoreactive monomer and a photoinitiator system or a photopolymer obtained therefrom; and a fluorinated compound, wherein based on the total amount of carbon, oxygen, fluorine and silicon atoms on the surface of the photopolymer layer confirmed by Electron Spectroscopy for Chemical Analysis, an element ratio of fluorine is 0.05 to 3 atomic%.

2. The hologram recording medium according to claim 1, wherein based on the total amount of carbon, oxygen, fluorine and silicon atoms on the surface of the photopolymer layer confirmed by Electron Spectroscopy for Chemical Analysis, an element ratio of fluorine is 0.05 to 2.9 atomic%.

3. The hologram recording medium according to claim 1, wherein based on the total amount of carbon, oxygen, fluorine and silicon atoms on the surface of the photopolymer layer confirmed by Electron Spectroscopy for Chemical Analysis, an element ratio of carbon is 50 to 80 atomic%, an element ratio of oxygen is 15 to 40 atomic%, and an element ratio of silicon is 0.5 to 10 atomic%.

4. The hologram recording medium according to claim 1, wherein the siloxane-based polymer comprises a repeating unit represented by the following Chemical Formula 1 and a terminal end group represented by the following Chemical Formula 2:

[Chemical Formula 1]

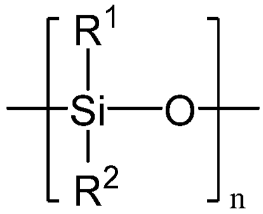

wherein, in Chemical Formula 1,

a plurality of $R^1$ and $R^2$ are the same or different from each other, and are each independently hydrogen, halogen, or an alkyl group having 1 to 10 carbon atoms, and
n is an integer of 1 to 10,000,

[Chemical Formula 2]

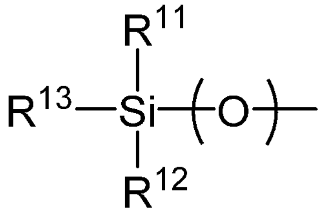

wherein, in Chemical Formula 2,

a plurality of $R^{11}$ to $R^{13}$ are the same or different from each other, and are each independently hydrogen, halogen, or an alkyl group having 1 to 10 carbon atoms, and
at least one of $R^1$, $R^2$ and $R^{11}$ to $R^{13}$ of at least one repeating unit selected among the repeating units represented by Chemical Formula 1 and any one terminal end group selected among the terminal end groups represented by Chemical Formula 2 is hydrogen.

**5.** The hologram recording medium according to claim 1, wherein the acrylic-based polyol is a polymer in which a hydroxy group is bonded to the main chain or side chain of an acrylate-based polymer.

**6.** The hologram recording medium according to claim 1, wherein a molar ratio of the silane functional group of the siloxane-based polymer to the hydroxyl group of the acrylic-based polyol is 1.5 to 4.

**7.** The hologram recording medium according to claim 1, wherein the photoreactive monomer comprises a monofunctional monomer and a multifunctional monomer.

**8.** The hologram recording medium according to claim 7, wherein the monofunctional monomer is contained in an amount of 30 to 68 % by weight based on the total weight of the photoreactive monomer.

**9.** The hologram recording medium according to claim 1, wherein the photoreactive monomer comprises at least one monofunctional monomer selected from the group consisting of benzyl (meth)acrylate, benzyl 2-phenylacrylate, phenoxybenzyl (meth)acrylate, phenol (ethylene oxide) (meth)acrylate, phenol (ethylene oxide)$_2$ (meth)acrylate, O-phenylphenol (ethylene oxide) (meth)acrylate, phenylthioethyl (meth)acrylate and biphenylmethyl (meth)acrylate.

**10.** The hologram recording medium according to claim 1, wherein the photoreactive monomer comprises at least one multifunctional monomer selected from the group consisting of bisphenol A (ethylene oxide)$_{2\sim10}$ di(meth)acrylate, bisphenol A epoxy di(meth)acrylate, bisfluorene di(meth)acrylate, modified bisphenol fluorene di(meth)acrylate, tris(2-hydroxyethyl)isocyanurate tri(meth)acrylate, phenol novolac epoxy (meth)acrylate and cresol novolac epoxy (meth)acrylate.

**11.** The hologram recording medium according to claim 1, wherein the photoreactive monomer is contained in an amount of 50 to 300 parts by weight based on 100 parts by weight of the polymer matrix.

**12.** The hologram recording medium according to claim 1, wherein the photoinitiator system comprises a photosensitive dye and a coinitiator.

**13.** The hologram recording medium according to claim 12, wherein the coinitiator comprises a borate anion represented by the following Chemical Formula 3:

[Chemical Formula 3] $BX^1X^2X^3X^4$

wherein, in Chemical Formula 3, $X^1$ to $X^4$ are each independently an alkyl group having 1 to 20 carbon atoms, an alkenyl group having 2 to 20 carbon atoms, an aryl group having 6 to 30 carbon atoms, an arylalkyl group having 7 to 30 carbon atoms, an alkylaryl group having 7 to 30 carbon atoms, or an allyl group, each of which is substituted or unsubstituted, with the proviso that at least one of $X^1$ to $X^4$ is not an aryl group.

**14.** The hologram recording medium according to claim 1, wherein the fluorinated compound is contained in an amount of 20 to 200 parts by weight based on 100 parts by weight of the polymer matrix.

**15.** The hologram recording medium according to claim 1, wherein the photopolymer layer comprises 17 to 38% by weight of the polymer matrix, 38 to 58% by weight of the photoreactive monomer, and 17 to 38% by weight of the fluorinated compound, based on the total weight of the polymer matrix, the photoreactive monomer, and the fluorinated compound.

**16.** The hologram recording medium according to claim 1, wherein when recording a notch filter hologram, a diffraction efficiency is 80% or more.

**17.** The hologram recording medium according to claim 1, wherein a haze is 2% or less.

**18.** A method for preparing a hologram recording medium, comprising the steps of:

applying a photopolymer composition to form a photopolymer layer, wherein the photopolymer composition comprises a polymer matrix formed by crosslinking a siloxane-based polymer containing a silane functional group and an acrylic-based polyol, or a precursor thereof; a fluorinated compound; a photoreactive monomer; and a photoinitiator system; and

irradiating a coherent laser onto a predetermined region of the photopolymer layer and selectively polymerizing the photoreactive monomer contained in the photopolymer layer to record optical information,

wherein based on the total amount of carbon, oxygen, fluorine and silicon atoms on the surface of the photopolymer layer confirmed by Electron Spectroscopy for Chemical Analysis, an element ratio of fluorine is 0.05 to 3 atomic%.

**19.** An optical element comprising the hologram recording medium according to claim 1.

【FIG. 1】

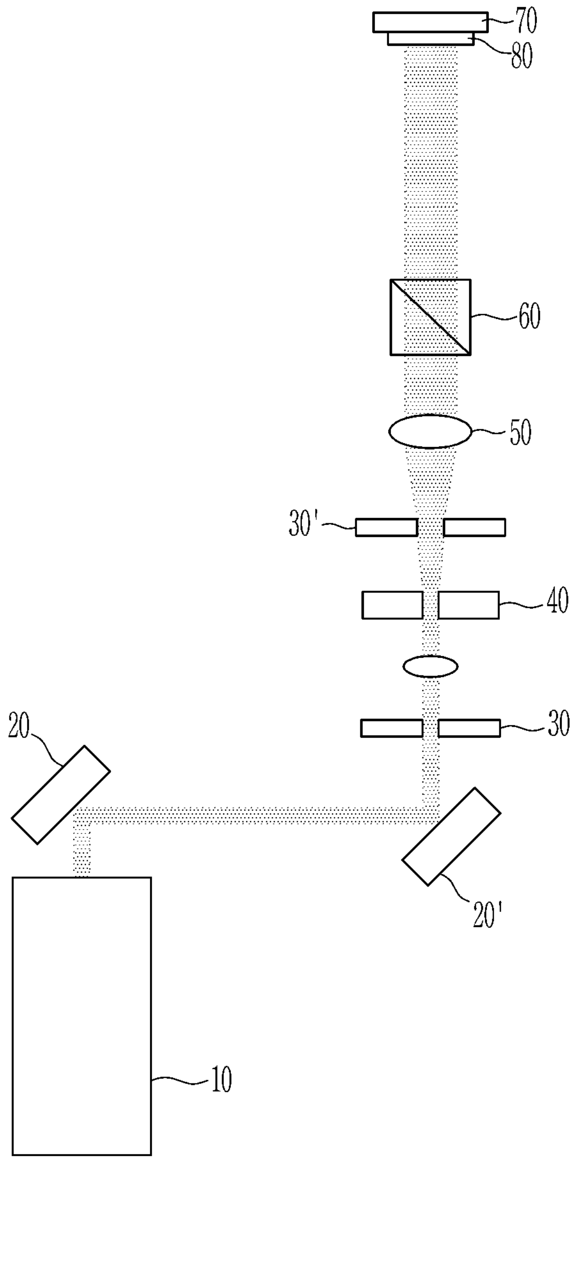

## INTERNATIONAL SEARCH REPORT

International application No. **PCT/KR2024/007223**

**A. CLASSIFICATION OF SUBJECT MATTER**

**G11B 7/0065**(2006.01)i; **C08F 290/06**(2006.01)i; **C08F 2/44**(2006.01)i; **C08F 2/50**(2006.01)i; **C08K 5/06**(2006.01)i

According to International Patent Classification (IPC) or to both national classification and IPC

**B. FIELDS SEARCHED**

Minimum documentation searched (classification system followed by classification symbols)

G11B 7/0065(2006.01); C08F 2/44(2006.01); C08F 283/12(2006.01); C08F 290/06(2006.01); C08J 3/24(2006.01); C08L 83/04(2006.01); C08L 83/12(2006.01); C09D 4/02(2006.01); C09D 4/06(2006.01); G03F 7/075(2006.01); G11B 7/24044(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 실록산계 고분자(siloxane-based polymer), (메트)아크릴계 폴리올((meth)acrylic-based polyol), 불소계 고분자(fluorine-based polymer), 광반응성 단량체(photoreactive monomer), 포토폴리머 층(photopolymer layer), 홀로그램 기록 매체(hologram recording media), 원소 비율(atomic ratio)

**C. DOCUMENTS CONSIDERED TO BE RELEVANT**

| Category* | Citation of document, with indication, where appropriate, of the relevant passages | Relevant to claim No. |
|---|---|---|
| A | KR 10-2384288 B1 (LG CHEM, LTD.) 06 April 2022 (2022-04-06)<br>See claims 1-7, 9-11 and 14-16; paragraphs [0058], [0062], [0063], [0070], [0076]-[0083], [0087], [0088], [0121]-[0123], [0125], [0126], [0128]-[0130] and [0135]; and table 1. | 1-19 |
| A | US 2002-0042004 A1 (SANDSTEDT, C. A. et al.) 11 April 2002 (2002-04-11)<br>See claims 24-53. | 1-19 |
| A | US 2017-0121469 A1 (INTERNATIONAL BUSINESS MACHINES CORPORATION) 04 May 2017 (2017-05-04)<br>See paragraphs [0019] and [0020]; and figure 1. | 1-19 |
| A | EP 4120018 A1 (LG CHEM, LTD.) 18 January 2023 (2023-01-18)<br>See claims 1-15; and paragraphs [0140]-[0142] and [0144]-[0148]. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2024** | **30 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

INTERNATIONAL SEARCH REPORT

International application No. PCT/KR2024/007223

C. DOCUMENTS CONSIDERED TO BE RELEVANT

| Category* | Citation of document, with indication, where appropriate, of the relevant passages | Relevant to claim No. |
|---|---|---|
| A | CN 114085558 A (SHANGHAI HUAGONG AIMAER NEW MATERIAL CO., LTD.) 25 February 2022 (2022-02-25)<br>See claims 1-10; and paragraph [0050]. | 1-19 |
| PX | WO 2024-106773 A1 (LG CHEM, LTD.) 23 May 2024 (2024-05-23)<br>See claims 1-15; paragraphs [0080]-[0083], [0089], [0091], [0096], [0099], [0105], [0129] and [0133]; manufacturing examples 1 and 2; example 1; and tables 1 and 2. | 1-19 |
| PX | KR 10-2024-0064274 A (LG CHEM, LTD.) 13 May 2024 (2024-05-13)<br>See claims 1-5, 7, 8, 10, 12, 13 and 16; paragraphs [0050], [0056], [0179] and [0181]; manufacturing examples 1 and 2; example 1; tables 4 and 5; and comparative example 3. | 1,2,4-7,9,10-14,16,18,19 |

Form PCT/ISA/210 (second sheet) (July 2022)

**INTERNATIONAL SEARCH REPORT**
**Information on patent family members**

International application No.
**PCT/KR2024/007223**

| Patent document cited in search report | Publication date (day/month/year) | Patent family member(s) | Publication date (day/month/year) |
|---|---|---|---|
| KR 10-2384288 B1 | 06 April 2022 | CN 112639617 A | 09 April 2021 |
| | | EP 3838937 A1 | 23 June 2021 |
| | | EP 3838937 B1 | 14 September 2022 |
| | | JP 2021-536039 A | 23 December 2021 |
| | | JP 7130306 B2 | 05 September 2022 |
| | | KR 10-2021-0003510 A | 12 January 2021 |
| | | US 11851515 B2 | 26 December 2023 |
| | | US 2021-0340302 A1 | 04 November 2021 |
| | | WO 2021-002648 A1 | 07 January 2021 |
| US 2002-0042004 A1 | 11 April 2002 | AU 5975501 A | 20 November 2001 |
| | | BR 0110937 A | 11 March 2003 |
| | | CA 2408244 A1 | 15 November 2001 |
| | | CN 1440551 A | 03 September 2003 |
| | | EP 1281176 A2 | 05 February 2003 |
| | | JP 2003-533718 A | 11 November 2003 |
| | | MX PA02011035 A | 10 September 2003 |
| | | WO 01-86647 A2 | 15 November 2001 |
| | | WO 01-86647 A3 | 21 March 2002 |
| US 2017-0121469 A1 | 04 May 2017 | None | |
| EP 4120018 A1 | 18 January 2023 | EP 4120018 A4 | 13 September 2023 |
| | | KR 10-2022-0112996 A | 12 August 2022 |
| | | US 2023-0142827 A1 | 11 May 2023 |
| | | WO 2022-169307 A1 | 11 August 2022 |
| CN 114085558 A | 25 February 2022 | None | |
| WO 2024-106773 A1 | 23 May 2024 | KR 10-2024-0070092 A | 21 May 2024 |
| KR 10-2024-0064274 A | 13 May 2024 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230076829
- KR 1020240068785